(19) Europäisches Patentamt
European Patent Office
Office européen des brevets

(11) Publication number: 0 467 113 A1

(12) # EUROPEAN PATENT APPLICATION

(21) Application number: 91110497.4

(22) Date of filing: 25.06.91

(51) Int. Cl.[5]: C08L 71/12, H01B 3/42

(30) Priority: 17.07.90 US 553847

(43) Date of publication of application: 22.01.92 Bulletin 92/04

(84) Designated Contracting States: DE ES FR GB IT NL

(71) Applicant: GENERAL ELECTRIC COMPANY
1 River Road
Schenectady New York 12305(US)

(72) Inventor: Lee, Gimm Fun, Jr.
11 Drawbridge Drive
Albany, New York 12203(US)

(74) Representative: Catherine, Alain
General Electric France Service de Propriété Industrielle 18 Rue Horace Vernet
F-92136 Issy-Les-Moulineaux Cedex(FR)

(54) **Thermoplastic compositions containing polyphenylene ether resin and characterized by improved elongation and flexibility.**

(57) Improved thermoplastic compositions characterized by very high tensile elongation values are described. They comprise polyphenylene ether resin and a hydrogenated elastomeric block copolymer having an A-B-A' structure, with specific molecular weight values for the copolymer blocks. Electrical conductor articles which include polymerized thermoplastic compositions as mentioned above represent another embodiment of this invention.

EP 0 467 113 A1

This invention generally relates to thermoplastic compositions containing polyphenylene ether resin and elastomeric multiblock copolymers, and to articles made therefrom.

Polyphenylene ether resin (also known as polyphenylene oxide or "PPE") has become widely accepted in the plastics industry because of its desirable physical and chemical properties, such as high heat resistance and dimensional stability. PPE by itself is dielectric and also somewhat flame-retarding; these are additional benefits promoting its use in certain products - for example, as an insulating material for electrical wire.

PPE-based compositions for these insulating applications sometimes include polyolefins, and exhibit improved impact strength and chemical resistance. Reference is therefore made here to U.S. Patent Application S.N. 372,218, filed June 23, 1989 (G. Lee, Jr., and J. Yates III), and U.S. Application S.N. 395,831, filed August 18, 1989 (G. Lee, Jr.), both of which are assigned to the assignee of the present application.

However, the inclusion of olefinic components can decrease the flame retardance of the overall composition, thereby necessitating the addition of special additives to regain this important property. As an illustration, U.S. Patent 4,808,647 (V. Abolins et.al.) describes the use of a multi-component flame retardant composition which includes an organic phosphate and a brominated material such as a tetrabromobisphenol A oligomeric polycarbonate.

While the compositions described in the Abolins patent exhibit excellent properties suitable for many applications, it is often desirable to minimize or eliminate the use of bromine or other halogen-containing additives in compositions designed for certain products. For example, the wire insulation compositions mentioned above frequently cannot contain halogen additives because they could form corrosive compounds when exposed to flame, thereby resulting in considerable damage to surrounding electrical equipment. Nevertheless, any modification of such an insulation composition must not result in significant decreases in the other important properties necessary for very durable products, e.g., flexibility and "stretchability".

It is therefore apparent that a need still exists for polyphenylene ether-based compositions that are flame retardant, flexible, and non-corrosive. In particular, a need exists for halogen-free wire insulation compositions which are flame retardant, and which exhibit very high tensile elongation and flexibility.

## SUMMARY OF THE INVENTION

The requirements described above have been satisfied by the discovery of the present invention, one embodiment of which is a thermoplastic composition comprising polyphenylene ether resin and from about 10% by weight to about 50% by weight of an elastomeric block copolymer having a hydrogenated A-B-A' structure, wherein A and A' are polymerized vinyl aromatic hydrocarbon blocks, and B is an ethylene-butylene block. The weight percentages for the block copolymer are based on the total weight of the entire composition. As further described below, the molecular weight of the blocks of the copolymer must be within certain ranges. In general, each block A and A' must have an average molecular weight in the range of about 6,500 to about 8,500, while each block B must have an average molecular weight in the range of about 25,000 to about 50,000.

As also described below, the particular combination of PPE resin with this specific elastomeric block copolymer has surprisingly resulted in compositions which exhibit important properties which are dramatically superior to those in compositions which contain other block copolymers.

Another embodiment of the present invention is an improved electrical conductor article which includes a very durable and flexible coating material formed from PPE resin and the elastomeric block copolymer described above. The coating material may be applied over the surface of the conductor, or may be used as a jacket layer applied over another wire insulating material.

## DETAILED DESCRIPTION OF THE INVENTION

The PPE resins suitable for the present invention are generally known in the art. Many of them are described in U.S. Patents 3,306,874; 3,306,875; and 3,432,469 of Allan Hay; U.S. Patents 3,257,357 and 3,257,358 of Gelu Stamatoff; U.S. Patent 4,806,602 of Dwain M. White et al.; and U.S. Patent 4,806,297 of Sterling B. Brown et al., all incorporated herein by reference. Both homopolymer and copolymer polyphenylene ethers are within the scope of this invention.

The preferred PPE resins are homo- and copolymers which comprise a plurality of structural units of the formula

I.

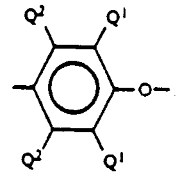

wherein each $Q^1$ is independently halogen, primary or secondary lower alkyl, phenyl, haloalkyl, aminoalkyl, hydrocarbonoxy, or halohydro-carbonoxy, wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$.

Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-, 3- or 4-methylpentyl, and the corresponding heptyl groups. Examples of secondary lower alkyl groups are isopropyl, sec-butyl and 3-pentyl. Preferably, any alkyl radicals are straight chain, rather than branched. Most often, each $Q^1$ is alkyl or phenyl, especially $C_{1-4}$ alkyl, and each $Q^2$ is hydrogen.

Especially preferred polyphenylene ethers will be comprised of units derived from 2,6-dimethyl phenol. Also preferred in some instances are PPE copolymers comprised of units derived from 2,6-dimethyl phenol and 2,3,6-trimethyl phenol.

This invention also includes within its scope PPE resins which contain certain moieties which modify properties such as molecular weight, melt viscosity, or impact strength. For example, vinyl monomers and vinylaromatic compounds may be grafted onto the PPE polymer, as described, for example, in the application of Sterling B. Brown et al., Attorney Docket Number RD-19372, U.S. Serial No. 351,903, filed May 15, 1989, the entire contents of which are incorporated herein by reference.

As another example, coupled PPE polymers may also be used, in which the coupling agent is reacted with hydroxy groups of two PPE chains to produce a higher molecular weight polymer.

The PPE resins of this invention generally have a weight average molecular weight of about 20,000 to 80,000, as determined by gel permeation chromatography.

Furthermore, they can be prepared by methods known in the art: for example, oxidative coupling of an appropriate monohydroxyaromatic compound in the presence of a catalyst based on copper, manganese, or cobalt.

In some embodiments, a polystyrene homopolymer or random copolymer resin may be included in the composition. These materials, which are very compatible with the PPE polymer, are known in the art and described, for example in U.S. Patents 3,383,435; 4,189,411; and 4,242,363, all incorporated herein by reference. Illustrative resins of this type are polystyrene, poly-alpha-methyl styrene, poly-paramethyl styrene, polychlorostyrene, brominated polymers (e.g., those formed from dibromostyrene monomer), as well as styrene polymers modified by admixture or interpolymerization with natural or synthetic elastomeric materials, e.g., polybutadiene, polyisoprene, butyl rubber, EPDM rubber, and the like. Also contemplated are styrene-acrylonitrile copolymers (SAN), acrylate-styrene-acrylonitrile terpolymers (ASA), and styrene-acrylonitrile-butadiene terpolymers (ABS). Special mention is made of rubber-modified styrene polymers ("high impact polystyrene"), which are frequently used in conjunction with PPE to enhance processing and impact strength.

The amount of styrene resin present (i.e., the amount of homopolymer, copolymer, or mixture as described above) is usually about 1% by weight to about 20% by weight, and preferably, about 2% by weight to about 10% by weight, based on the weight of the entire composition.

The elastomeric block copolymer which must be used in the present invention is characterized by an A-B-A' structure, wherein A and A' are polymerized vinyl aromatic hydrocarbon blocks, and B is an ethylene-butylene block derived from at least one polymerized conjugated diene. In preferred embodiments, the block copolymers preferably contain between about 15% and 50% by weight of vinyl aromatics.

Center block B of he block copolymer should be almost completely hydrogenated, i.e., the average unsaturation of the copolymer should be reduced to less than about 20% of its original value. In more preferred embodiments, the average unsaturation will be reduced to less than 10%, and most preferably, less than about 5% of its original value. Methods for accomplishing the hydrogenation of the B block are known in the art.

In preferred embodiments of this invention, A and A' are polymers independently derived from the group of monomers consisting of styrene, alpha-methyl styrene, para-methyl styrene, vinyl toluene, vinyl

xylene, vinyl naphthalene, chlorostyrene, bromostyrene, dibromostyrene, and combinations thereof. Styrene monomer is most preferred.

In preferred embodiments, center block B is derived from at least one conjugated diene such as 1,3-butadiene. In the most preferred embodiments, B is obtained via post-hydrogenation of polybutadiene.

It is essential that the polymers corresponding to each block of the block copolymer of this invention be within a certain molecular weight range. Thus, the A and A' blocks must have an average molecular weight (independently) in the range of about 6,500 to about 8,500, and most preferably, in the range of about 7,000 to about 8,000. The average molecular weight of the B block must be in the range of about 25,000 to about 50,000 and most preferably, in the range of about 30,000 to about 40,000.

An especially preferred elastomeric block copolymer for this invention comprises blocks of styrene and post-hydrogenated polybutadiene within the above-prescribed molecular weight ranges, and is often referred to as "SEBS". One commercial example of a suitable material is the linear KRATON®G-1652 thermoplastic rubber, available from Shell Chemical Company.

The level of elastomeric block copolymer present depends on a variety of factors, such as the particular type of PPE resin used, the contemplated end use of the product, the level of tensile elongation required in such a product, and the presence or absence of other additives in the composition. In preferred embodiments, the block copolymer is present at a level in the range of about 10% by weight to about 50% by weight, based on the weight of the entire composition. In more preferred embodiments, the level is about 15% by weight to about 40% by weight, while in most preferred embodiments, the level is about 20% by weight to about 30% by weight, based on the entire composition.

The preparation of elastomeric block copolymers such as the type used in the present invention is known in the art. For example, one technique involves the successive polymerization of the monomers in solution in the presence of a monolithium hydrocarbon initiator. Further aspects of the preparation of these polymers can be found in European Patent 0,095,098; in U.S. Patents 3,113,986; 3,431,323; 3,700,633; and 4,167,507, in the U.S. Application of Christian Bailly and William R. Haaf, S.N. 407,600, filed September 15, 1989; in German Public Disclosure 1,222,260; and in German Letters of Disclosure 2,013,263, the contents of all of these references being incorporated herein by reference.

Some embodiments of the present invention include a polyolefin resin, such as those described in the above-mentioned Application S.N. 372,218 of Gim Lee and John Yates, incorporated herein by reference. Examples of suitable polyolefins are polyethylene, polypropylene, polyisobutylene, copolymers of ethylene and propylene, copolymers of ethylene and organic esters such as ethylene vinyl acetate, ethylene ethyl acrylate, ethylene methyl acrylate, and the like, as well as mixtures of any polyolefins. The materials themselves are known in the art, as are methods for making them.

Preferred polyolefins are polyethylene, polypropylene, and polybutylene. Especially preferred are low density polyethylene (LDPE), very low density polyethylene, linear low density polyethylene (LLDPE), medium density polyethylene (MDPE), high density polyethylene (HDPE), high impact (copolymer) polypropylene, or combinations of any of the above.

A suitable level of polyolefin is about 1% by weight to about 30% by weight, based on the weight of the entire composition. A preferred level is about 1% by weight to about 20% by weight, and a most preferred level is about 1% by weight to about 15% by weight.

Some embodiments of the present invention include a plasticizer. Examples are phosphate compounds; mineral oil; phthalate- , adipate- , and sebacate esters; polyols such as ethylene glycol, and the like, as well as mixtures of any of these materials. Arylphosphates, alkylated arylphosphates, and mixtures of any of these phosphates are often preferred; many of them can also provide a degree of flame retardancy to the composition.

Examples of suitable organic phosphates include phenyl bisdodecyl phosphate, ethyldiphenyl phosphate, tri-(nonylphenyl)phosphate, tricresyl phosphate, triphenyl phosphate, alkylated derivatives of triphenyl phosphate, dibutylphenyl phosphate, 2-ethylhexyldiphenyl phosphate, as well as mixtures of any of these materials. Also possible and sometimes preferred for use are difunctional and polyfunctional phosphate compounds, such as those described in U.K. Patent Application GB 2,043,083A of William Haaf et al., and in U.S. Patent Application S.N. (Attorney Docket Number 8CN-8525, 335-2239), filed July 11, 1990 as a continuation application of S.N. 429,165, filed October 30, 1989 for V. Abolins, J. Betts, and F. Holub, the contents of which are incorporated herein by reference. Examples of these materials are bis diphenyl phosphates of resorcinol or hydroquinone, as well as mixtures which comprise such phosphates. Other suitable phosphates are taught in U.S. Patent 4,900,768 of V. Abolins et al, incorporated herein by reference. Triarylphosphates in admixture with alkylated aryl phosphates are often most preferred for this invention.

Those of ordinary skill in the art can determine the appropriate level of plasticizer without undue

experimentation. Usually, the plasticizer is present at a level of from about 1% to about 25% by weight, based on the weight of the entire composition; a preferred level is often within the range of about 5% by weight to about 15% by weight.

Some embodiments of this invention also include one or more phosphite compounds, which often increase the tensile elongation of materials made from these compositions.

The phosphite compound used in the present invention can be of various types, such as alkyl phosphites, aryl phosphites, alkyl-aryl phosphites, diphosphites, polyphosphites, and thiophosphites. Many are disclosed in U.S. Patents 4,659,760 and 4,472,546, incorporated herein by reference. Examples of suitable phosphites are triphenyl phosphite, diphenyl phosphite, trimesityl phosphite, dimesityl-phenyl phosphite, trineopentyl phosphite, didecylphenyl phosphite, dichloroethyl phosphite, tributyl phosphite, trilauryl phosphite, tris(nonylphenyl) phisphite, tridecyl phosphite, diphenyldecyl phosphite, tricresyl phosphite, triisooctyl phosphite, tri-2-ethylhexyl phosphite, trioctadecyl phosphite, thiophosphite, phenyl-diethyl phosphite, phenyl-di-(2-ethylhexyl) phosphite, isooctyldiphenyl phosphite, diisooctylmonophenyl phosphite, distearyl pentaerythritol diphosphite, octadecyl 3-(3,5-di-t-butyl-4 hydroxyphenyl) propionate (e.g., ULTRANOX® 276 additive), bis(2,4-di-t-butylphenyl) pentaerythritol diphosphite (commercially available as ULTRANOX® 626 or ULTRANOX® 624), diphenyl isooctyl phosphite, diisooctyl phosphite, distearyl phosphite, diphenylisodecyl phosphite, diisodecyl pentaerythritol diphosphite, poly(dipropylene glycol) phenyl phosphite, and trilauryl trithiophosphite, as well as mixtures of the above.

An effective amount of the phosphite compound is usually in the range of about 0.01% by weight to about 10% by weight, based on the weight of the entire composition, with 0.1% by weight to about 1% by weight being most preferred. The most appropriate range can be determined according to various factors, such as the contemplated end use for the product, as well as the particular identity of the other components present.

Various other additives may be included in the compositions of this invention, their utility being of course dependent in part on the contemplated end use for the compositions. Non-limiting examples of these additives include reinforcing agents such as fibrous glass and graphite whiskers, antioxidants, mold release agents, mineral fillers, pigments, dyes, heat stabilizers, light stabilizers, processing stabilizers, abrasion resistance compounds, and the like, as well as additional flame retardants and/or plasticizers. These additives are usually included in effective amounts of between about 1% and 50% by weight of the total composition.

These compositions can be prepared by well-known procedures. Often, the ingredients are combined as a pre-mix blend, and then extruded on a single or twin screw extruder.

Another embodiment of this invention includes an improved electrical conductor article, having a coating material comprising the components described above: polyphenylene ether resin and from about 10% by weight to about 50% by weight of an elastomeric block copolymer having a hydrogenated A-B-A' structure, wherein A and A' are polymerized vinyl aromatic hydrocarbon blocks, and B is an ethylene-butylene block; and wherein the molecular weight of the blocks of the copolymer are within the specific ranges described above. The coating composition utilized in this embodiment may of course contain the other additives mentioned above, e.g., the plasticizer and/or phosphite compound.

The coating composition is applied over the surface of an electrical conductor, for example, copper or aluminum wire or cable. (Sometimes, the conductor is first coated with another material, e.g., a material which inhibits or prevents oxidation). Known methods of application are suitable, such as extrusion, followed by cooling. The coating thus forms an excellent electric-insulator for the metal. If desirable, one or more outer or "jacket" layers may be formed over the coating. These layers are also often formed of a polymeric material, such as polyvinyl chloride, a polyester like polybutylene terephthalate, or a polyamide, and can also be applied by extrusion techniques, such as tandem extrusion.

Alternatively, the coating composition of this invention may be used itself as a jacket layer applied over a wire insulating material such as polyvinyl chloride.

As the examples below demonstrate, the wire coating compositions of this invention are characterized by high flexibility and elongation.

Furthermore, the improved compositions described herein are not limited for use as a coating material. They may be used to form any type of formed (e.g., molded, calendered, or extruded) article where excellent tensile elongation and flame retardance are desirable.

The following examples are provided to illustrate various embodiments of this invention. They are for the purpose of illustration only, and should not be regarded as limiting the invention to any of the specific materials or conditions described therein.

EXAMPLES

The compositions set forth in Table 1 were prepared by dry-blending the ingredients and then melt-blending the mix, using a twin screw extruder. All values are by weight, unless otherwise indicated.

Listed below are some of the components found in the table:

Polyphenylene ether - Poly(2,6-dimethyl-1,4-phenylene) ether, having an intrinsic viscosity of 0.46 dl/g, as measured in chloroform at 25°C.

Plasticizer - Mixture of tri(aryl) phosphate and alkylated derivatives thereof.

KRATON® 1650 Resin - Linear styrene-(ethylene-butylene)-styrene triblock rubber, available from Shell Chemical Company, having a total average molecular weight of 74,000, with each styrene block having a weight of 10,000, and the ethylene-butylene block having a weight of 54,000.

KRATON® 1651 Resin - Linear styrene-(ethylene-butylene)-styrene triblock rubber, available from Shell Chemical Company, having a total average molecular weight of 174,000, with each styrene block having a weight of 29,000, and the ethylene-butylene block having a weight of 116,000.

KRATON® 1652 Resin - Linear styrene-(ethylene-butylene)-styrene triblock rubber, available from Shell Chemical Company, having a total average molecular weight of 52,000, with each styrene block having a weight of 7,500, and the ethylene-butylene block having a weight of 37,000.

KRATON® 1702 Resin - Styrene-(ethylene-propylene) diblock rubber, available from Shell Chemical Company, having a polystyrene block with a molecular weight of 43,000, and an ethylene-propylene block with a molecular weight of 121,000.

ULTRANOX 626 - Bis(2,4-di-t-butylphenyl) pentaerythritol diphosphite, available from GE Specialty Chamicals, Inc.

MD-1024 - A metal deactivator/stabilizer, available from Ciba-Geigy Corporation.

The melt-blended extrudate representing each sample was quenched and pelletized, and then remelted in an extruder equipped with a die for coating wires. The molten polymer was thereby applied to 14 gauge copper wire to form coatings which, upon cooling, were about 0.013 inches thick.

The tensile elongation tests (UL 1581) were run at 20 inches per minute on the coatings after they were stripped from the wire.

Some of the material was heat-aged for 7 days at 136°C and then cooled at room temperature before being tested for tensile characteristics.

Flame retardance tests were also performed on some of the samples, as indicated in Table 1. The test used was the Vertical Wire Flame Test, UL 1581 (1080, VW-1, as published, 1983-1985).

Samples 2,4, and 5 represent the present invention; samples 1,3, and 6-8 are comparison examples.

E 1

TABLE 1

| le No. (a)(b) | PPE | Plasticizer(b) | KG 1650(c) | KG 1651 | KG 1652 | KGX 1702(c) | Tensile Elongation Unaged (%) | Tensile Elongation Aged (%) | F.R.(d) |
|---|---|---|---|---|---|---|---|---|---|
| (e) | 45 | 15 | 40 | — | — | — | 18 | 23 | Pass |
| (e) | 45 | 15 | — | — | 40 | — | 138 | 108 | Pass |
| (f) | 45 | 14 | 29 | — | — | — | 83 | — | — |
| (f) | 45 | 14 | — | — | 29 | — | 136 | — | — |
| | 51 | 17 | — | — | 32 | — | 136 | — | — |
| * | 51 | 17 | 32 | — | — | — | 48 | — | — |
| * | 51 | 17 | — | 32 | — | — | 63 | — | — |
| * | 51 | 17 | — | — | — | 32 | 32 | — | — |

Comparative Samples
= All components in parts-by-weight
= Mixture of aromatic phosphate compounds and derivatives
= "KG", "KGX" indicate KRATON® materials
= Flame Retardancy; Time-to-extinguish was as follows (seconds):
Sample 1: 10, 9, 0, 0, 0/10, 7, 0, 0, 0/11, 6, 0, 0, 0
Sample 2: 15, 7, 0, 0, 0/7, 5, 1, 0, 0/12, 3, 0, 0, 0
= Samples 1 & 2 had 0.5 parts each of both a phosphite stabilizer and a metal deactivator
= Samples 3 & 4 each had 8 parts of homopolystyrene and 3 parts of mineral oil

The data in Table 1 demonstrate that the use of the triblock astomeric copolymers of the present invention in conjunction with E resin results in an extremely large increase in tensile elongation, both aged and unaged samples. Furthermore, flame retardancy and her physical properties were substantially retained.

Variations of this invention will suggest themselves to those skilled in the art, in light of the above description. These variations are within the full intended scope of the appended claims.

## Claims

1. An improved thermoplastic composition comprising polyphenylene ether resin and from about 10% by weight to about 50% by weight, based on the weight of the entire composition, of an elastomeric block copolymer having a hydrogenated A-B-A' structure, wherein A and A' are polymerized vinyl aromatic hydrocarbon blocks, and B is an ethylene-butylene block, and

   wherein the average molecular weight of each block A and A' is independently in the range of about 6,500 to about 8,500, and the average molecular weight of the B block is in the range of about 25,000 to about 50,000.

2. The composition of claim 1 wherein the polyphenylene ether comprises a plurality of structural units of the formula:

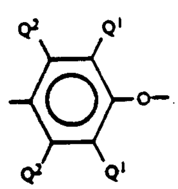

wherein each $Q^1$ is independently halogen, primary or secondary lower alkyl, phenyl, haloalkyl, aminoalkyl, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$.

**3.** The composition of claim 2 wherein the polyphenylene ether is poly(2,6-dimethyl-1,4-phenylene ether).

**4.** The composition of claim 2 wherein the polyphenylene ether is derived from a monomer selected from the group consisting of 2,6-dimethyl phenol; 2,3,6-trimethyl phenol, and mixtures thereof.

**5.** The composition of claim 1, further comprising a styrene homopolymer or copolymer.

**6.** The composition of claim 5, wherein the styrene homopolymer or copolymer is selected from the group consisting of homopolystyrene, poly-alpha-methyl styrene, polyparamethyl styrene, polychlorostyrene, brominated styrene polymers, styrene-acrylonitrile copolymers, acrylate-styrene-acrylonitrile terpolymers, styrene-acrylonitrile-butadiene (ABS) terpolymers, and rubber-modified styrene polymers.

**7.** The composition of claim 1, wherein the elastomeric block copolymer is present at a level of about 15% by weight to about 40% by weight.

**8.** The composition of claim 7, wherein the elastomeric block copolymer is present at a level of about 20% by weight to about 30% by weight.

**9.** The composition of claim 1, wherein the A and A' blocks of the elastomeric block copolymer have an average molecular weight in the range of about 7,000 to about 8,000.

**10.** The composition of claim 1, wherein the B block of the elastomeric block copolymer has an average molecular weight in the range of about 30,000 to about 40,000.

**11.** The composition of claim 1, wherein the A and A' blocks of the elastomeric block copolymer are polymers independently derived from the group of monomers consisting of styrene, alpha-methyl styrene, para-methyl styrene, vinyl toluene, vinyl xylene, vinyl naphthalene, chlorostyrene, bromostyrene, dibromostyrene, and combinations thereof.

**12.** The composition of claim 1, wherein the B block of the elastomeric block copolymer is derived from polybutadiene.

**13.** The composition of claim 1, wherein the elastomeric block copolymer is styrene-(ethylene-butylene)-styrene.

**14.** The composition of claim 1, further comprising a plasticizer selected from the group consisting of phosphate compounds; mineral oil; phthalate- , adipate- , and sebacate esters; polyols, and mixtures of any of these materials.

**15.** The composition of claim 14, wherein the phosphate is an organic compound selected from the group consisting of arylphosphates, alkylated arylphophates, difunctional phosphates, polyfunctional phosphates, and mixtures comprising any of these materials.

**16.** The composition of claim 14, wherein the plasticizer is present in the composition at a level of about 1% by weight to about 25% by weight, based on the weight of the entire composition.

**17.** The composition of claim 1, further comprising a polyolefin resin.

**18.** The composition of claim 17 wherein the polyolefin is selected from the group consisting of polyethylene, polypropylene, polyisobutylene, copolymers of ethylene and propylene, copolymers of ethylene and at least one organic ester, and mixtures of these materials.

**19.** The composition of claim 18 wherein the polyethylene is selected from the group consisting of low

density polyethylene, very low density polyethylene, linear low density polyethylene, medium density polyethylene, high density polyethylene, and mixtures of these materials.

**20.** The composition of claim 17 wherein the polyolefin resin is present at about 1% by weight to about 30% by weight, based on the weight of the entire composition.

**21.** The composition of claim 1, further comprising about 0.01% by weight to about 10% by weight of a phosphite compound, based on the weight of the entire composition.

**22.** The composition of claim 1, further comprising effective amounts of at least one additive selected from the group consisting of reinforcing agents, antioxidants, mold release agents, mineral fillers, pigments, dyes, abrasion resistance compounds, heat stabilizers, light stabilizers, and processing stabilizers.

**23.** An improved thermoplastic composition exhibiting enhanced tensile elongation characteristics, comprising:

a) at least one polyphenylene ether resin;

b) about 10% by weight to about 50% by weight, based on the weight of the entire composition, of an elastomeric block copolymer having a hydrogenated A-B-A' structure, wherein A and A' are polymerized vinyl aromatic hydrocarbon blocks, and B is an ethylene-butylene block, and

wherein the average molecular weight of each block A and A' is in the range of about 6,500 to about 8,500, and the average molecular weight of the B block is in the range of about 25,000 to about 50,000;

c) about 1% by weight to about 25% by weight of an organic phosphate compound or mixtures thereof, based on the weight of the entire composition; and

d) about 1% by weight to about 30% by weight of a polyolefin resin, based on the weight of the entire composition.

**24.** An improved electrically conductive article, comprising:

a) an electrical conductor; and

b) a coating material disposed over the conductor, and formed from a composition which comprises polyphenylene ether resin and from about 10% by weight to about 50% by weight, based on the weight of the entire composition, of an elastomeric block copolymer having a hydrogenated A-B-A' structure, wherein A and A' are polymerized vinyl aromatic hydrocarbon blocks, and B is an ethylene-butylene block,

wherein the average molecular weight of each block A and A' is in the range of about 6,500 to about 8,500, and the average molecular weight of the B block is in the range of about 25,000 to about 50,000.

**25.** The article of claim 24, wherein the coating material is applied directly to the conductor surface, or to the conductor surface which has been coated with another material.

**26.** The article of claim 24, wherein the coating is applied over an insulating layer of a polymeric material which itself is applied over the conductor surface.

**27.** The article of claim 24, wherein the conductor material comprises copper metal or alloys containing copper.

European Patent Office

# EUROPEAN SEARCH REPORT

Application Number

EP 91110497.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP - A1 - 0 389 837 (MITSUBISHI CABLE INDUSTRIES LTD) * Page 2, line 4 - page 5, line 26; examples; claims * -- | 1-27 | C 08 L 71/12<br>H 01 B 3/42 |
| X | EP - A2 - 0 358 993 (GENERAL ELECTRIC COMPANY) * Page 2, line 10 - page 6, line 27; examples; claims * ---- | 1-23 | |

TECHNICAL FIELDS SEARCHED (Int. Cl.5)

C 08 L 71/00
C 08 L 53/00
H 01 B

The present search report has been drawn up for all claims

| Place of search | Date of completion of the search | Examiner |
|---|---|---|
| VIENNA | 03-10-1991 | TENGLER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)